(19) Europäisches Patentamt

European Patent Office

Office européen des brevets

(11) **EP 4 184 883 B1**

(12) **EUROPÄISCHE PATENTSCHRIFT**

(45) Veröffentlichungstag und Bekanntmachung des Hinweises auf die Patenterteilung:
**07.01.2026 Patentblatt 2026/02**

(21) Anmeldenummer: **21208988.2**

(22) Anmeldetag: **18.11.2021**

(51) Internationale Patentklassifikation (IPC):
*H04L 45/24* *(2022.01)*     *H04L 47/50* *(2022.01)*
*H04L 47/41* *(2022.01)*     *H04L 47/625* *(2022.01)*

(52) Gemeinsame Patentklassifikation (CPC):
**H04L 45/24;** H04L 47/41; H04L 47/58; H04L 47/626

(54) **ADAPTIVER MULTIPFAD-SCHEDULER**

ADAPTIVE MULTIPATH SCHEDULER

PLANIFICATEUR ADAPTATIF À CHEMINS MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.05.2023 Patentblatt 2023/21**

(73) Patentinhaber: **Robert Bosch GmbH
70442 Stuttgart (DE)**

(72) Erfinder: **Suer, Marie-Theres
38102 Braunschweig (DE)**

(56) Entgegenhaltungen:
**EP-A1- 3 860 064**

- **SUER MARIE-THERES ET AL: "Multi-Connectivity as an Enabler for Reliable Low Latency Communications-An Overview", IEEE COMMUNICATIONS SURVEYS & TUTORIALS, IEEE, USA, vol. 22, no. 1, 25 October 2019 (2019-10-25), pages 156 - 169, XP011778012, DOI: 10.1109/COMST.2019.2949750**

- **SUER MARIE-THERES ET AL: "Impact of Link Heterogeneity and Link Correlation on Multi-Connectivity Scheduling Schemes for Reliable Low-Latency Communication", 2020 IEEE INTERNATIONAL CONFERENCE ON COMMUNICATIONS WORKSHOPS (ICC WORKSHOPS), IEEE, 7 June 2020 (2020-06-07), pages 1 - 6, XP033796343, DOI: 10.1109/ICCWORKSHOPS49005.2020.9145473**

- **WU HONGJIA ET AL: "Peekaboo: Learning-Based Multipath Scheduling for Dynamic Heterogeneous Environments", IEEE JOURNAL ON SELECTED AREAS IN COMMUNICATIONS, IEEE SERVICE CENTER, PISCATAWAY, US, vol. 38, no. 10, 8 June 2020 (2020-06-08), pages 2295 - 2310, XP011808970, ISSN: 0733-8716, [retrieved on 20200915], DOI: 10.1109/JSAC.2020.3000365**

## Beschreibung

### Technisches Gebiet

Die vorliegende Erfindung betrifft Techniken zum adaptiven Auswählen eines Scheduling-Schemas für eine Datenpaketübertagung in einem Multipfad-Kommunikationssystem. Zugehörige Aspekte betreffen ein Computer-Programm, einen adaptiven Multipfad-Scheduler und ein Multipfad-Kommunikationssystem.

### Hintergrund

Verfahren wie Multipfad-TCP (engl. "Multipath Transmission Control Protocol" oder kurz "Multipath TCP"), Multipfad-QUIC (engl. "Multipath Quick UDP Internet Connections" oder kurz "Multipath QUIC") oder zweifache Konnektivität auf der PDCP-Schicht (engl. "dual connectivity at the Packet Data Convergence Protocol layer") in 3GPP (engl. "3rd Generation Partnership Project ") sind Beispiele für bekannte Protokolle, in Rahmen derer mehrere Übertragungspfade eines Multipfad-Kommunikationssystems zur Datenpaketübertagung zwischen zwei Geräten (zwischen einem Sender und einem Empfänger) verwendet werden können. Die einigen bestehenden Methoden des Standes der Technik verwenden jedoch ein einziges Scheduling-Schema während der Datenpaketübertagung über mehrere Übertragungspfade. Darüber hinaus sehen einige Methoden des Standes der Technik vor, dass die Duplizierung von Datenpaketen während der Datenpaketübertagung (das sogenannte Paketduplizierung-Schema) unter bestimmten Umständen aktiviert oder deaktiviert werden kann. Je nach dem aktuellen Szenario der Datenübertragung (z.B. abhängig von einer aktuellen Netzwerklast, einer Signalstärke eines Senders oder eine Kombination davon) kann das eine oder andere Scheduling-Schema aus verschiedenen Scheduling-Schemen eine verbesserte Dienstgüte bei der Datenübertragung (bspw. im Hinblick auf Übertragungslatenz, Zuverlässigkeit, Sicherheit, erforderliche Breite oder eine Kombination davon) im Vergleich zu den restlichen Scheduling-Schemen erreichen. Mit den manchen bestehenden Verfahren wird dieser Umstand nicht berücksichtigt, da nur ein Scheduling-Schema verwendet wird.

EP 3 860 064 A1 offenbart ein Verfahren zur Auswahl eines Scheduling-Schemas, wobei das Scheduling-Schema basierend auf der Korrelation von Latenzmessungen der Kommunikationspfade ausgewählt wird.

Daher besteht ein Bedarf an der Entwicklung neuer Techniken für Multipfad-Kommunikationssysteme, die einige oder alle der oben genannten Probleme lösen können.

### Zusammenfassung der Erfindung

Ein erster allgemeiner Aspekt der vorliegenden Offenbarung betrifft ein Verfahren zum adaptiven Auswählen eines Scheduling-Schemas für eine Datenpaketübertagung in einem Multipfad-Kommunikationssystem. Das Verfahren wird im Anspruch 1 festgelegt.

Ein zweiter allgemeiner Aspekt der vorliegenden Offenbarung betrifft ein Computer-Programm, welches dafür ausgelegt ist, um das Verfahren gemäß dem ersten allgemeinen Aspekt der vorliegenden Offenbarung auszuführen.

Ein dritter allgemeiner Aspekt der vorliegenden Offenbarung betrifft einen adaptiven Multipfad-Scheduler eines Multipfad-Kommunikationssystems, das dazu ausgelegt ist, um das Verfahren gemäß dem ersten allgemeinen Aspekt der vorliegenden Offenbarung auszuführen und/oder das Computer-Programm gemäß dem zweiten allgemeinen Aspekt auszuführen.

Ein vierter allgemeiner Aspekt der vorliegenden Offenbarung betrifft ein Multipfad-Kommunikationssystem, das einen adaptiven Multipfad-Scheduler gemäß dem dritten Aspekt umfasst. Darüber hinaus umfasst das Multipfad-Kommunikationssystem gemäß dem vierten Aspekt einen Sender, der dazu ausgelegt ist, um eine Mehrzahl von Datenpaketen zu dem Empfänger zu übertragen. Der Sender des vierten Aspekts kann mit dem Empfänger über zwei oder mehr Übertragungspfade verbunden werden. Das Multipfad-Kommunikationssystem des vierten Aspektes ist dazu ausgelegt, um das Verfahren gemäß dem ersten allgemeinen Aspekt der vorliegenden Offenbarung auszuführen.

Die Techniken der ersten bis vierten allgemeinen Aspekte können einen oder mehrere der folgenden Vorteile haben.

Erstens können die vorliegenden Techniken es ermöglichen, ein Scheduling-Schema eines Multipfad-Kommunikationssystems für eine Datenpaketübertagung im Vergleich zu anderen vorhandenen Scheduling-Schemen adaptiv auszuwählen, indem die Eigenschaften der verschiedenen Übertragungspfade des Multipfad-Kommunikationssystems (wie bspw. verschiedene Übertragungspfadkenngrößen sowie mögliche Korrelationen zwischen Übertragungspfadkenngrößen unterschiedlicher Übertragungspfade) in Echtzeit bestimmt werden. Infolgedessen kann die Dienstgüte bei der Datenpaketübertagung über mehrere Übertragungspfade besser als bei manchen anderen Verfahren nach dem Stand der Technik sein.

Zweitens bieten die Techniken der vorliegenden Offenbarung die Möglichkeit, eine (globale) Netzwerkbelastung in dem Multipfad-Kommunikationssystem in Echtzeit zu bestimmen, was wiederum helfen kann zu entscheiden, welches Scheduling-Schemas im Vergleich zu den anderen vorhandenen Scheduling-Schemen in Echtzeit (bspw. zu einem bestimmten Zeitpunkt der Datenpaketübertagung) die beste Dienstgüte gewährleisten kann.

Einige Begriffe werden in der vorliegenden Offenbarung in folgender Weise verwendet:
Ein "Sender" (z.B. eine Sendeeinheit) kann in der vorliegenden Offenbarung jede Datenquelle sein. Ein Sender kann z.B. in einer Uplink-Richtung (d.h. die Datenpaketübertragungsrichtung, die aus der Sicht eines Endgerätes in Richtung eines Telekommunikationsnetzes geht) ein Audio-, Video-, Radio-, TV-, Sensordaten-Sender (bspw., ein Mobiltelefon, ein Computer, ein Laptop, ein Musik-Player oder ein Tablet) sein, der über entsprechende Übertragungspfade Datenpakete übertragen kann. In der WLAN-Terminologie kann der Sender als eine Station oder ein Sendeknoten bezeichnet werden (bspw. ein Mobiltelefon, ein Computer oder ein anderes oben genanntes Gerät, das mit einem WLAN-Adapter oder einem anderen Netzwerkgerät versehen ist). In manchen Fällen kann der "Sender" in der WLAN-Terminologie als ein WLAN-Klient der Station oder des Sendeknotens (bspw. eine Applikation) verstanden werden. Unter dem Begriff "Sender" wird im Zusammenhang mit einem Mobilnetzwerk ein Benutzerendgerät (engl. "user equipment" oder kurz UE) verstanden, das mit einem oder mehreren mobilen Breitbandadapter (bspw. ein multi-SIM-Gerät) oder einem anderen Gerät ausgestattet ist. In manchen Beispielen kann der Sender in einem Live-Streaming-Modus betrieben werden. In manchen Fällen können Datenpakete (z.B. Digital- oder Analogsignale, die diesen Datenpaketen entsprechen) an eine Einheit ausgegeben werden, die dem gewählten Übertragungspfad auf der Senderseite zugeordnet ist. Insbesondere kann ein Datenpaket an ein dem ausgewählten Übertragungspfad zugeordnetes (internes oder externes) Netzwerkgerät des Senders ausgegeben werden, um das Datenpaket unter Verwendung dieses Netzwerkgeräts an den Empfänger zu übertragen.

Bei einem "Empfänger" handelt es sich um einen Empfänger, der abseits eines Senders angeordnet ist, und der die von einem Sender gesendeten Datenpakete empfangen kann (z.B. direkt über entsprechende Übertragungspfade). Unter einem "Empfänger" wird in der vorliegenden Offenbarung im Zusammenhang mit der WLAN-Technologie in einer Uplink-Richtung ein drahtloser Zugangspunkt oder kurz Zugangspunkt (ZP) (engl. "Wireless Access Point" oder kurz "Access Point") verstanden. In manchen Fällen kann der Begriff "Empfänger" eine Basisstation eines Mobilfunknetzes in einer Uplink-Richtung umfassen, wenn Datenpakete über das Mobilfunknetz übertragen werden.

Im Falle der Downlink-Richtung (d.h. die Datenpaketübertragungsrichtung, die aus der Sicht eines Endgerätes aus Richtung eines Telekommunikationsnetzes kommt) wird der "Empfänger" in der vorliegenden Offenbarung dem oben definierten "Sender" der Uplink-Richtung entsprechen. Darüber hinaus wird der "Sender" der Downlink-Richtung dem oben definierten "Empfänger" der Uplink-Richtung entsprechen.

Unter dem Begriff "Übertragungspfad" wird ein Kommunikationspfad (bzw. Kommunikationsweg) zwischen einem oben definierten Sender und einem Empfänger verstanden, welche durch den Kommunikationspfad untereinander kommunizieren können. Der Sender kann mit dem Empfänger über mehrere (unterschiedliche) Übertragungspfade verbunden werden, so dass das Multipfad-Kommunikationssystem mehrere Übertragungspfade zusammen mit dem Sender und dem Empfänger umfasst. Zwei Übertragungspfade können sich räumlich unterscheiden, z.B. wenn sie zwischen einem Sender und Empfängern (bspw. zwei oder mehr Zugangspunkten) verlaufen, die sich an unterschiedlichen Standorten befinden. In manchen Fällen können sich zwei Übertragungspfade dadurch unterscheiden, dass sie verschiedene Frequenzkanäle oder Frequenzbänder für die Datenpaketübertragung nutzen (bspw. sendet ein Sender Datenpakte über zwei oder mehr Frequenzkanäle oder Frequenzbänder an einen Empfänger, was zur Bildung von zwei oder mehr entsprechenden Übertragungspfaden führt). In manchen Beispielen unterscheiden sich zwei Übertragungspfade durch die verschiedenen verwendeten Funkzugangstechnologien (engl. "Radio Access Technology"). In manchen Beispielen können zwei unterschiedliche Übertragungspfade eine beliebige Kombination der oben genannten Unterschiede aufweisen. Zwei unterschiedliche Übertragungspfade können identische oder unterschiedliche Kommunikationsprotokollen (bspw. WLAN-Protokollen der IEEE-802.11-Familie, z.B. 802.11ah oder spätere Protokolle) zur Datenpaketübertagung einsetzen. Die Funkverbindung kann als WLAN-Verbindung, als WPAN-Verbindung (bspw. unter Verwendung von einem Übertragungsprotokoll des Standards IEEE 802.15.4), als Mobilfunkverbindung, bspw. als UMTS, GPRS, 4G-, LTE-, oder 5G-Verbindung ausgebildet sein.

Unter dem Begriff "Übertragungspfadkenngröße" wird jegliche für das Übertragen eines Datenpakets auf einem Übertragungspfad relevante Kenngröße bzw. eine das Übertragen des Datenpakets beeinflussende Kenngröße des Übertragungspfads verstanden. Ein Signal-Rausch-Verhältnis (SRV) von Datenpaketen des Übertragungspfads ist laut Anspruch eine solche Übertragungspfadkenngröße. Eine Warteschlangenlänge des Übertragungspfads auf der Senderseite ist ebenfalls eine Übertragungspfadkenngröße im Sinne der vorliegenden Erfindung. Die Warteschlangenlänge kann bspw. als eine Anzahl von Datenpaketen in der Warteschlange (z.B. auf der Senderseite) definiert werden, die über den jeweiligen Übertragungspfad übertragen werden sollen. Eine Übertragungslatenz (oder kurz eine Latenz) kann auch eine Übertragungspfadkenngröße des Übertragungspfads sein. Unter einer Latenz des Übertragungspfads kann im Rahmen der vorliegenden Erfindung eine Zeit verstanden werden, die für das Übertragen des Datenpakets auf dem Übertragungspfad von dem Sender zu dem Empfänger benötigt wird. Darüber hinaus kann ein Jitter als Übertragungspfadkenngröße gewählt werden, der eine Schwankung der Latenzen bei der Übertragung über einen Übertragungspfad bezeichnet. Zu den Übertragungspfadkenngrößen kann zum Beispiel eine Übertragungsdatenrate oder kurz eine Datenrate (definiert bspw. als eine Anzahl von pro Zeiteinheit übertragenen Informationseinheiten), eine Übertragungskapazität oder eine Übertragungsbandbreite gehören. Die weiteren nicht erschöpfenden Beispiele für Übertragungspfadkenngrößen schließen eine Verlustwahrscheinlichkeit des Übertragungspfads und eine Paketverlustrate des Übertragungspfads ein, wobei letztere die Anzahl der bei der Übertragung verlorenen Datenpakete relativ zu der Anzahl der gesendeten Datenpakete repräsentiert.

"Eine Korrelation" zwischen einer oder mehreren Übertragungspfadkenngrößen eines Übertragungspfades und einer oder mehreren Übertragungspfadkenngrößen eines anderen Übertragungspfades im Rahmen der vorliegenden Erfindung beschreibt das Ausmaß, in dem sich eine oder mehrere Übertragungspfadkenngrößen eines Übertragungspfades (bspw. eine Latenz, ein Signal-Rausch-Verhältnis, eine Paketverlustrate oder ähnliche) ändern (z.B. zeitlich), wenn Datenpakete über einen anderen Übertragungspfad übertragen werden, der durch entsprechende Übertragungspfadkenngröße charakterisiert ist. Mit anderen Worten: Eine Korrelation zwischen verschiedenen Übertragungspfaden kann beschreiben, wie die Übertragungspfadkenngrößen der verschiedenen Übertragungspfade zeitlich zusammenhängen (mehr dazu weiter unten). In diesem Sinne kann auch über "die Korrelation" zwischen zwei oder mehreren Übertragungspfaden gesprochen werden.

Demensprechend umfasst der Begriff "Dienstgüte" die Qualität einer Kommunikationsverbindung (im Englischen auch als "Quality of Service" oder "QoS" bezeichnet) über einen solchen Übertragungspfad, die anhand einer Menge von oben definierten Übertragungspfadkenngrößen beschrieben wird. Daher können diese QoS-Parameter bspw. eine Datenrate, eine Übertragungskapazität, eine Latenz, eine Übertragungsbandbreite, eine Übertragungszuverlässigkeit (z.B. maximaler Frameverlust, maximale Anzahl von Bitkippern, maximale Wahrscheinlichkeit von CRC-Fehlern, Notwendigkeit einer redundanten Übertragung), einen Jitter oder eine Kombination davon umfassen. Darüber hinaus kann die Dienstgüte in diesem Kontext auch weitere Eigenschaften wie beispielsweise IT-Sicherheit (englisch "Security") und/oder funktionale Sicherheit bzw. Zuverlässigkeit (englisch "Safety") beinhalten. Die IT-Sicherheit kann sich auf den Schutz von Daten (z. B. Nachrichten) u. a. hinsichtlich ihrer Integrität beziehen, wenn eine Nachricht nicht unterwegs verändert werden darf (z.B. während der Übertragung von Daten innerhalb eines Kommunikationssystems und/oder zwischen dem Kommunikationssystem und anderen Systemen). Andererseits ist unter funktionaler Sicherheit bzw. Zuverlässigkeit in den vorliegenden Techniken die Betriebssicherheit zu verstehen (die sich beispielweise durch eine zu hohe Latenz verschlechtern kann), also der Schutz von Mensch und Umwelt.

Demensprechend umfasst der Begriff "Kommunikationsnetzwerk" die oben definierten Übertragungspfade zwischen einem oder mehreren Sendern und entsprechenden einen oder mehreren Empfängern. In diesem Sinne können diese Übertragungspfade und das dadurch gebildete Kommunikationsnetzwerk Datenpakete über ein oder mehrere WLAN-Netzwerke und/oder ein oder mehrere Mobilnetzwerke übertragen. Somit kann das Kommunikationsnetzwerk der vorliegenden Erfindung im Zusammenhang mit der Datenpaketübertagung über mehrere Übertragungspfade eine (globale) Netzwerkbelastung erfahren, welche durch eine Netzwerkkenngröße bspw. einen Netzwerklastparameter charakterisiert werden kann (mehr dazu weiter unten).

Unter dem Begriff "Multipfad-Kommunikationssystem" wird jede Infrastruktur zur Übertragung von Datenpaketen über mehrere Übertragungspfade innerhalb dieses Multipfad-Kommunikationssystems verstanden. Zudem umfasst das Multipfad-Kommunikationssystem das oben definierte Kommunikationsnetzwerk. Das Multipfad-Kommunikationssystem der vorliegenden Offenbarung kann Subsysteme umfassen, bspw., wie oben erwähnt, einen Sender (bspw., ein Mobiltelefon, einen Computer oder einen Laptop) und einen oder mehrere Empfänger (bspw. einen oder mehrere Zugangspunkte), welche durch entsprechende Übertragungspfade des Multipfad-Kommunikationssystems verbunden sein und untereinander kommunizieren können. Das Kommunikationssystem kann auch zwei oder mehr Sender umfassen, die durch Übertragungspfaden des Multipfad-Kommunikationssystems mit einem oder mehreren jeweiligen Empfängern verbunden sind. Darüber hinaus können Empfänger und/oder der Sender Informationen an andere Geräte übertragen oder Informationen oder Anforderungen von den anderen Geräten empfangen, die nicht Teil des Multipfad-Kommunikationssystems sind.

"Ein Scheduling-Schema" für eine Datenpaketübertagung in einem Multipfad-Kommunikationssystem der vorliegenden Erfindung entscheidet, welche Datenpakete (oder deren Fragmente) über welchen Übertragungspfad übertragen werden (z.B. von einem Sender zu einem Empfänger, wie oben bereits besprochen). Darüber hinaus kann das "Scheduling-Schema" festlegen, in welcher Reihenfolge und/oder zu welchen Datenpunkten Datenpakte über die Übertragungspfade des Kommunikationssystems (bspw. von einem Sender zu den mehreren Empfängern) übertragen werden (mehr dazu weiter unten).

Ein "Datenpaket" kann bspw. Videodaten, Sprachdaten, Messdaten oder Nachrichten umfassen. Das Datenpaket kann auch codierte Daten enthalten, beispielsweise, Daten, die unter Verwendung von einer Codierungstechnik codiert wurden. Das Datenpaket kann auf dem Übertragungspfad von dem Sender zu dem Empfänger übertragen werden. In der vorliegenden Offenbarung kann eine Mehrzahl von Datenpaketen Test-Datenpakete umfassen (d.h. Datenpakete, deren Inhalt für den Nutzer unwichtig ist), die zum adaptiven Auswählen eines Scheduling-Schemas für eine Datenpaketübertagung in einem Multipfad-Kommunikationssystem verwendet werden können.

## Kurzbeschreibung der Figuren

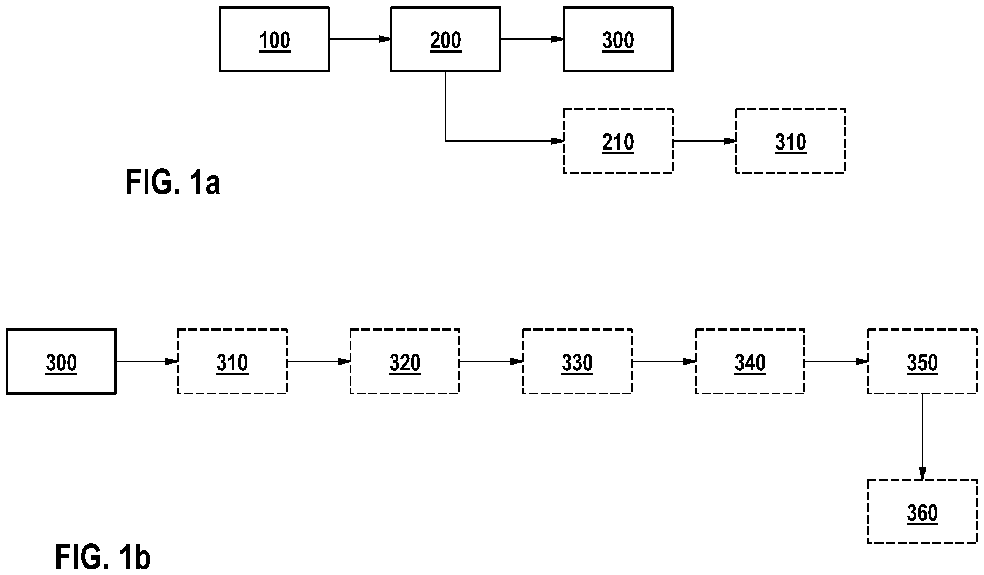

**Fig. 1a** ist ein Flussdiagramm, das ein Beispiel eines zum adaptiven Auswählen eines Scheduling-Schemas für eine Datenpaketübertagung in einem Multipfad-Kommunikationssystem gemäß dem ersten Aspekt darstellt. **Fig. 1b** ist ein Flussdiagramm, das weitere mögliche Verfahrensschritte gemäß dem ersten Aspekt zeigen.

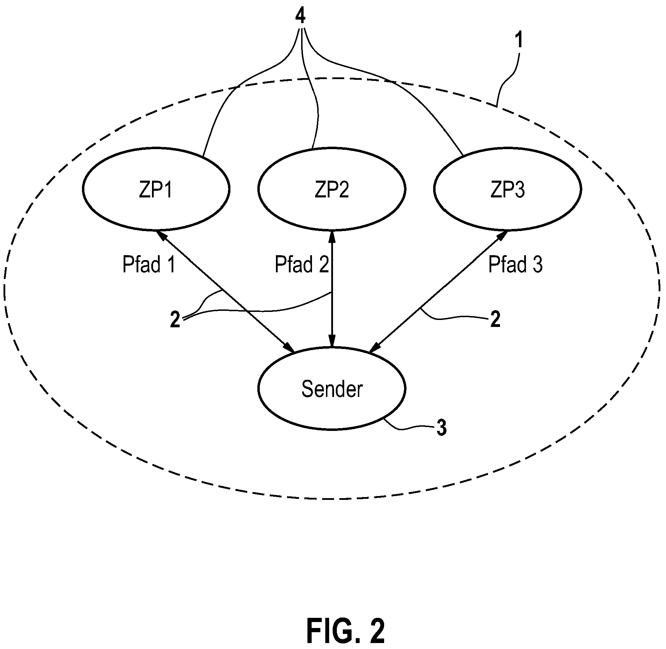

**Fig. 2** zeigt schematisch eine beispielhafte Struktur eines Multipfad-Kommunikationssystems 1, das einen Sender 3, drei drahtlose Zugangspunkte 4 (ZP1-ZP3) und entsprechende Übertragungspfaden 2 umfasst, über die der Sender und die Zugangspunkte miteinander Daten austauschen können.

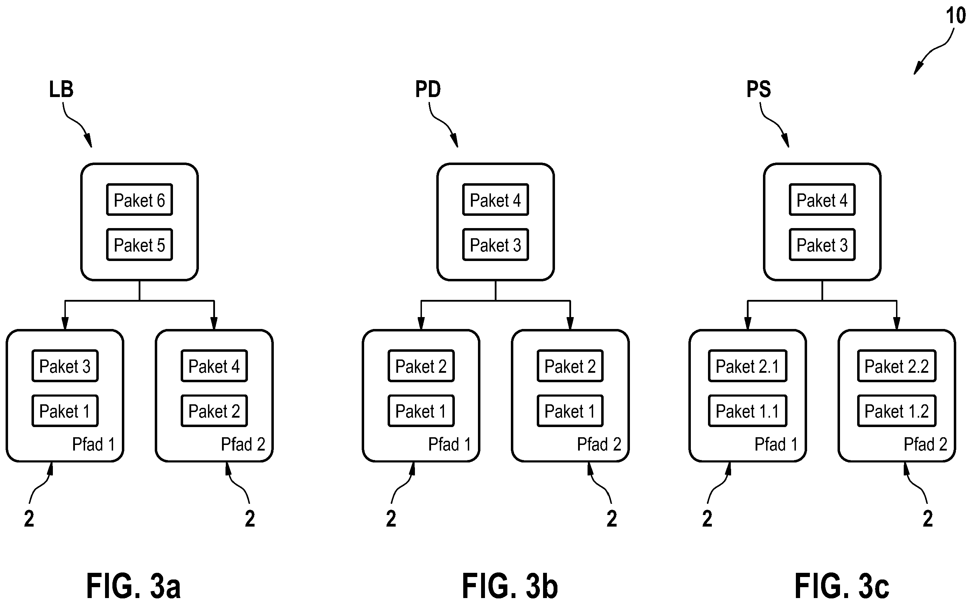

**Fig. 3a** bis **3c** zeigen schematisch drei beispielhaften Scheduling-Schemen 10 für eine Datenpaketübertagung eines Multipfad-Kommunikationssystems auf der Senderseite. LB: Lastverteilung (engl. "Load Balancing" oder kurz LB); PD: Paketduplizierung (engl. "packet duplication" oder kurz PD); PS: Paketfragmentierung (engl. "packet splitting" oder kurz PS).

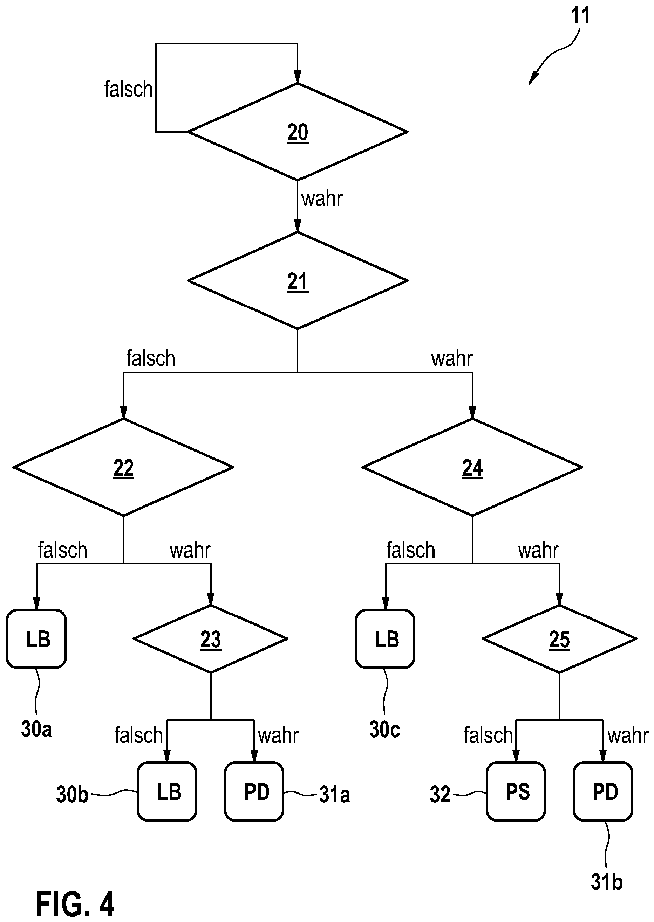

**Fig. 4** zeigt schematisch ein Flussdiagramm 11 und weitere Aspekte eines Verfahrens zum adaptiven Auswählen eines Scheduling-Schemas LB; PD; PS für eine Datenpaketübertagung in einem Multipfad-Kommunikationssystem 1.

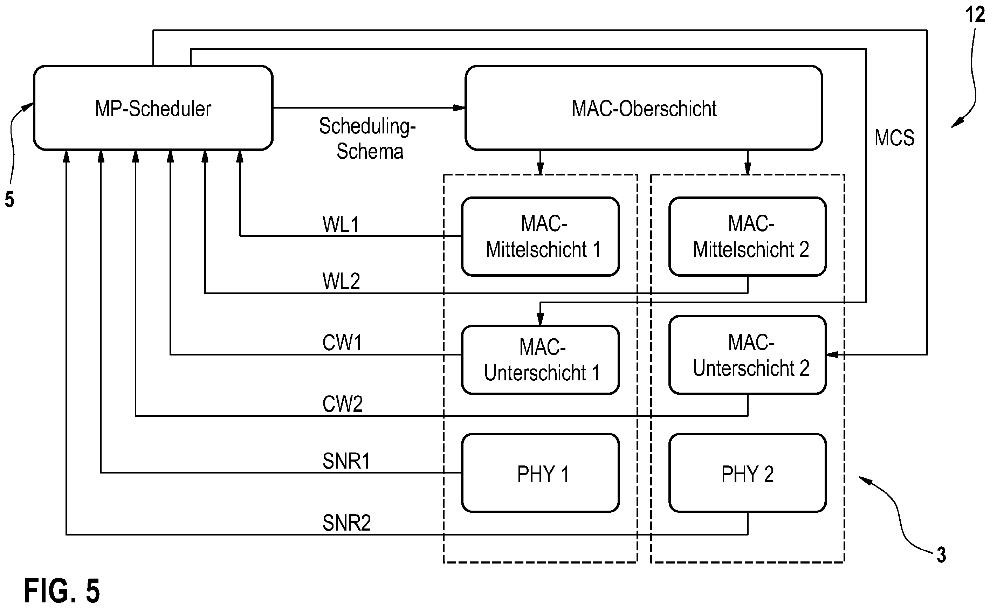

**Fig. 5** zeigt schematisch eine beispielhafte Architektur für eine Implementierung 12 der Scheduling-Schemen 10 mit einem adaptiven Multipfad-Scheduler 5 und zwei Übertragungspfade eines Multipfad-Kommunikationssystems unter Verwendung von einem ns-3-Simulator (sh. z.B. den folgenden Link https://www.nsnam.org/), die für den IEEE 802.11 Standard anwendbar ist. MAC: Medienzugriffssteuerung (engl. "Medium Access Control"). PHY: physische Schicht. SNR: Signal-Rausch-Verhältnis. WL: Warteschlangenlänge. CW: Konfliktfenster (engl. "Contention Window"). MCS: Modulations- und Codierungsschema (engl. "modulation and coding scheme").

## Ausführliche Beschreibung

Zunächst werden anhand von **Fig. 1a** und **1b** Techniken zum adaptiven Auswählen eines Scheduling-Schemas für eine Datenpaketübertagung in einem Multipfad-Kommunikationssystem beschrieben. Sodann wird eine beispielhafte Struktur eines Multipfad-Kommunikationssystems anhand von **Fig. 2** besprochen. Als nächstes wird in den **Fig. 3a** bis **3c** drei beispielhaften Scheduling-Schemen für eine Datenpaketübertagung eines Multipfad-Kommunikationssystems gezeigt. Danach wird **Fig. 4** eine mögliche Ausgestaltung und weitere Aspekte eines Verfahrens der vorliegenden Offenbarung veranschaulichen. Zuletzt wird anhand von **Fig. 5** eine Architektur für eine Implementierung der Scheduling-Schemen mit einem adaptiven Multipfad-Scheduler beschrieben.

Wie in den **Fig. 1a** und **1b** skizziert, betrifft ein erster allgemeiner Aspekt ein Verfahren zum adaptiven Auswählen eines Scheduling-Schemas LB; PD; PS für eine Datenpaketübertagung in einem Multipfad-Kommunikationssystem 1. In den vorliegenden Techniken bedeutet das adaptive Auswählen des Scheduling-Schemas, wie weiter unten genauer erläutert, dass das Scheduling-Schema während der Datenpaketübertagung (d.h. in Echtzeitbetrieb) so ausgewählt werden kann, dass dieses ausgewählte Scheduling-Schema (z.B. zu einem bestimmten Zeitpunkt) eine bessere Dienstgüte (z.B. eine kleinere Latenz oder eine geringere Verlustwahrscheinlichkeit von Datenpaketen) als die anderen vorhandenen Scheduling-Schemen gewährleisten kann. Die in der Folge diskutierten konkreten Beispiele für die Datenpaketübertragung in der Uplink-Richtung dienen zur Veranschaulichung der Anwendung der vorliegenden Techniken. Die darin enthaltene Lehre ist jedoch nicht auf die Uplink-Richtung beschränkt und kann bspw. für die Datenpaketübertagung in der Downlink-Richtung angewendet werden. Die Verfahrensschritte des entsprechenden unabhängigen Anspruchs sind in den durch durchgezogene Linien gezeichneten Kästen in **Fig. 1a** und **1b** dargestellt, während die Verfahrensschritte einiger abhängiger Ansprüche in den durch gestrichelte Linien dargestellten Kästen gezeigt sind.

Der erste Schritt des Verfahrens umfasst das Bestimmen 100 von zumindest zwei Übertragungspfadkenngrößen für jeden Übertragungspfad (bspw. von einem Signal-Rausch-Verhältnis und einer Warteschlangenlänge auf der Senderseite) von mindestens zwei Übertragungspfaden 2 aus den zwei oder mehr Übertragungspfaden für eine Mehrzahl von Datenpaketen. Laut Anspruch umfassen die zumindest zwei Übertragungspfadkenngrößen eine jeweilige Warteschlangenlänge und ein Signal-Rausch-Verhältnis von Datenpaketen aus der Mehrzahl von Datenpaketen, die über den entsprechenden Übertragungspfad von mindestens zwei Übertragungspfaden übertragen werden. In manchen Fällen können die zumindest zwei Übertragungspfadkenngrößen für jeden Übertragungspfad (z.B. für die drei in **Fig. 2** gezeigten Übertragungspfade) aus den zwei oder mehr Übertragungspfaden für die Mehrzahl von Datenpaketen bestimmt werden. In der vorliegenden Offenbarung wird die Mehrzahl von Datenpaketen über die zwei oder mehr Übertragungspfade des Multipfad-Kommunikationssystems übertragen. In manchen Fällen kann das Multipfad-Kommunikationssystem einen oder mehrere Sender 3 (bspw. ein oder mehrere Mobiltelefone und/oder einen oder mehrere Computer) und einen oder mehrere Empfänger 4 (bspw. einen oder mehrere Zugangspunkte) umfassen. Im Beispiel von **Fig. 2** ist schematisch ein Multipfad-Kommunikationssystem 1 dargestellt, das einen Sender 3, drei Empfänger 4 (Zugangspunkte ZP1 bis ZP3) und drei Übertragungspfade 2 umfasst, über die der Sender und die Empfänger miteinander verbunden werden können. In diesem Beispiel können Datenpaketen der Mehrzahl von Datenpaketen von dem Sender 3 zu dem jeweiligen Empfänger "4; ZP1-ZP3" über einen Übertragungspfad "2; Pfad1-Pfad3" übertragen werden. Wie oben bereits erwähnt kann der Sender mit dem Empfänger über mehrere (unterschiedliche) Übertragungspfade verbunden werden. Zum Beispiel kann ein Übertragungspfad auf der Senderseite 3 Datenpakete über eine WLAN-Verbindung unter Verwendung von einem Frequenzkanal an den ersten Zugangspunkt ZP1 übertragen und der andere Übertragungspfad auf der Senderseite 3 Datenpakete über die WLAN-Verbindung anhand eines anderen Frequenzkanals an den ersten Zugangspunkt ZP1 übertragen kann. In manchen Fällen kann ein Übertragungspfad auf der Senderseite Datenpakete über eine WLAN-Verbindung übertragen, während die beiden anderen Überragungspfade jeweils einem Mobilnetzwerk zugeordnet sein können (bspw. von zwei verschiedenen Mobilfunknetzbetreibern bereitgestellt), so dass Datenpakete über eine entsprechende Mobilfunkverbindung (bspw. zu einer entsprechenden Basisstation) übertragen werden (in **Fig. 2** nicht dargestellt).

In manchen Fällen kann der Übertragungspfad einen von dem Sender umfassten Sender-Endpunkt und einen von dem Empfänger umfassten Empfänger-Endpunkt aufweisen. Der Sender-Endpunkt kann ein Protokollanfangspunkt eines Kommunikationsprotokolls (kurz "Protokoll-Sender") zur Übertragung des Datenpakets von dem Sender zu dem Empfänger (bspw. von einer Sendeeinheit zu einer Empfangseinheit) sein. Der Sender-Endpunkt kann Teil des Senders, z.B. eines Netzwerkgeräts des Senders sein. In der vorliegenden Offenbarung kann der Empfänger-Endpunkt ein Protokollendpunkt eines Kommunikationsprotokolls (kurz "Protokoll-Empfänger") zur Übertragung des Datenpakets von dem Sender zu dem Empfänger sein. Zudem kann der Empfänger-Endpunkt Teil des Empfängers sein. Der Übertragungspfad kann sich vorzugsweise von dem Sender insbesondere über bzw. durch das dem Übertragungspfad zugeordnete Netzwerkgerät des Senders bis zum Protokollendpunkt des Empfängers erstrecken. Der Sender 3 kann bspw. so eingerichtet werden, um ein Datenpaket der Mehrzahl von Datenpaketen über eine jeweilige Schnittstelle an den Empfänger 4 zu senden. Der Empfänger kann seinerseits so eingerichtet werden, dass er das Datenpaket empfängt (bspw. über eine oder mehrere jeweilige Schnittstellen). Dabei kann im Sinne der vorliegenden Offenbarung jedes Paar der sendeseitigen und empfängerseitigen Schnittstellen Teil eines jeweiligen Übertragungspfades sein.

In der vorliegenden Offenbarung können die zumindest zwei Übertragungspfadkenngrößen eines Übertragungspfades von mindestens zwei Übertragungspfaden (z.B. einen ersten Übertragungspfad, einen zweiten Übertragungspfad, oder einen anderen Übertragungspfad, der sich von dem ersten und zweiten Übertragungspfad unterscheidet) eine jeweilige Warteschlangenlänge und ein Signal-Rausch-Verhältnis (SRV) von Datenpaketen aus der Mehrzahl von Datenpaketen umfassen, die über den Übertragungspfad von mindestens zwei Übertragungspfaden übertragen werden. In manchen Fällen kann eine Paketverlustrate oder ein Konfliktfenster (engl. "Contention Window" oder kurz CW) eine der Übertragungspfadkenngrößen sein, das ein Indikator für Paketverluste ist. Wie oben bereits erwähnt, können eine Latenz, ein Jitter, eine Datenrate, eine Paketverlustrate, eine Übertragungszuverlässigkeit oder eine Kombination davon die weitere Übertragungspfadkenngröße des Übertragungspfades sein. Zurück zu dem Beispiel von **Fig. 2**: die Warteschlangenlängen von Datenpaketen auf der Senderseite 3 und die Signal-Rausch-Verhältnisse von Datenpaketen, die von dem Sender 3 zu den drei Zugangspunkten ZP1 bis ZP3 übertragen wurden, können für alle drei Übertragungspfade "2; Pfad1-Pfad3" bestimmt werden. Zum Beispiel können die Warteschlangenlängen auf der Senderseite bestimmt werden, während die Signal-Rausch-Verhältnisse auf der Empfängerseite bestimmt werden können, z.B. durch eine entsprechende Komponente des Senders (bzw. Empfänger) oder eine externe Komponente in Bezug auf den Sender (bzw. Empfänger), mit dem sie verbunden ist. In manchen Fällen kann der Empfänger und der Sender Informationen über die Übertragungspfadkenngrößen miteinander austauschen (bspw. über einen entsprechenden Übertragungspfad). Alternativ oder zusätzlich können die Informationen über die Übertragungspfadkenngrößen an einen adaptiven Multipfad-Scheduler 5 (bspw. von dem Sender und/oder Empfänger) übertragen und dort analysiert werden (siehe **Fig. 5** und weitere Diskussionen).

Als nächstes umfassen die vorliegenden Techniken das Bestimmen 200 einer Korrelation zwischen mindestens einer Übertragungspfadkenngröße von zumindest zwei Übertragungspfadkenngrößen eines Übertragungspfades und einer entsprechenden Übertragungspfadkenngröße von zumindest zwei Übertragungspfadkenngrößen eines oder mehrerer anderer Übertragungspfade aus den zwei oder mehr Übertragungspfaden für die Mehrzahl von Datenpaketen. Wie oben bereits erwähnt kann die Korrelation zwischen den Übertragungspfadkenngrößen unterschiedlicher Übertragungspfade charakterisieren, inwieweit Übertragungspfadkenngrößen (laut Anspruch eine Warteschlangenlänge und ein SNR, oder (nicht im Anspruch 1 angeführt) eine der anderen oben erwähnten Übertragungspfadkenngrößen) eines individualen Übertragungspfades von den Übertragungspfadkenngrößen eines anderen oder mehrerer anderer Übertragungspfade abhängen. So können sich z.B. eine oder mehrere Übertragungspfadkenngrößen eines ersten Übertragungspfades ändern, wenn die Datenpakete über einen anderen Übertragungspfad übertragen werden, der sich von dem ersten Übertragungspfad unterscheidet (bspw., wenn derselbe Sender die Daten über die beiden Übertragungspfade an zwei verschiedene Empfänger sendet). In einem Beispiel kann die Korrelation anhand der Pearsonschen Korrelationskoeffizient (engl. "Pearson correlation coefficient") beschrieben werden. In manchen Fällen können sich die Übertragungspfadkenngrößen der Übertragungspfade im Laufe der Zeit ändern, so dass die Korrelation zwischen den Übertragungspfadkenngrößen der beteiligten Übertragungspfade eine Funktion der Zeit sein kann.

Der nächste Schritt des Verfahrens umfasst das adaptive Auswählen 300 eines Scheduling-Schemas für eine Datenpaketübertragung über die zwei oder mehr Übertragungspfade mindestens basierend auf den bestimmten Übertragungspfadkenngrößen und der Korrelation. Drei beispielhaften Scheduling-Schemen 10 für eine Datenpaketübertagung des Multipfad-Kommunikationssystems 1 auf der Senderseite sind in **Fig. 3a** bis **3c** für zwei Übertragungspfade schematisch dargestellt. Bei dem Lastverteilung-Schema (LB) wird jedes Paket einzeln nur über einen Übertragungspfad übertragen (die Datenpakete 1 und 3 der **Fig. 3a** werden über den "Pfad 1" übertragen, während die Datenpakete 2 und 4 über den "Pfad 2" übertragen werden). In dem Beispiel des Paketduplizierung-Schemas (PD) wird das Datenpaket repliziert und über einen Übertragungspfad übertragen, während sein Duplikat über einen oder mehrere andere Übertragungspfade übertragen wird (die Datenpakete 1 und 3 in **Fig. 3b** werden über den "Pfad 1" und ihre Duplikate über den "Pfad 2" übertragen). Wenn das Paketfragmentierung-Schema für die Datenpaketübertragung (oder mit anderen Worten für die Verteilung der Datenpakete über die Übertragungspfade) angewendet wird, wird das Datenpaket fragmentiert und seine Fragmente werden über einen oder mehrere andere Übertragungspfade übertragen (die Fragmente 1.1 und 2.1 der Datenpakete 1 und 2 in **Fig. 3c** werden über den "Pfad 1" übertragen, während die Fragmente 1.2 und 2.2 derselben Datenpakete 1 und 2 über den "Pfad 2" übertragen werden).

Das Verfahren der vorliegenden Offenbarung umfasst das Bestimmen 210 mindestens einer Netzwerkkenngröße eines Kommunikationsnetzwerkes des Multipfad-Kommunikationssystems. Laut Anspruch 1 ist die mindestens eine Netzwerkkenngröße des Kommunikationsnetzwerks des Multipfad-Kommunikationssystems (bspw. des in **Fig. 2** dargestellten Multipfad-Kommunikationssystems) ein Netzwerklastparameter, der eine Netzwerkbelastung beschreibt, welche über die Zeit variieren kann (mehr dazu weiter unten). In manchen Fällen können Informationen über den Netzwerklastparameter von einem oder mehreren Empfängern an die jeweiligen Sender (bspw. an allen Sender) und/oder an den Multipfad-Scheduler übertragen werden. Zum Beispiel können diese Informationen im Falle der WLAN-Verbindung (bspw. unter Verwendung des Standards IEEE 802.11) durch einen Zugangspunkt bestimmt und mittels der Beacon-Nachrichten (im Englischen auch als "beacon frame" im Standard IEEE 802.11 bezeichnet) an die jeweilige Sender (z.B. in einem zusätzlichen Feld der Beacon-Nachricht) übertragen werden. Des Weiteren kann der Schritt "das adaptive Auswählen" basierend auf der mindestens einen Netzwerkkenngröße (bspw. des Netzwerklastparameters) des Kommunikationsnetzwerkes geschehen.

In den vorliegenden Techniken kann das adaptive Auswählen des Scheduling-Schemas für die Datenpaketübertagung (d.h. in Echtzeitbetrieb wie oben bereits erwähnt) über die zwei oder mehr Übertragungspfade nach einem Zeitplan 20 erfolgen. In einem Beispiel kann der Zeitplan umfassen, dass eine vorbestimmte Anzahl von Datenpaketen aus der Mehrzahl von Datenpaketen übertragen werden sollte, bevor das adaptive Auswählen durchgeführt wird (d.h. wenn diese Bedingung 20 nicht erfüllt ist, wird weiterhin das zuvor verwendete Scheduling-Schema für die Datenpaketübertagung verwendet). In anderen Beispielen kann der Zeitplan umfassen, dass Datenpakete aus der Mehrzahl von Datenpaketen innerhalb eines vorbestimmten Zeitintervalls übertragen werden sollten, bevor das adaptive Auswählen durchgeführt wird.

Alternativ oder zusätzlich kann das adaptive Auswählen des Scheduling-Schemas für die Datenpaketübertagung über die zwei oder mehr Übertragungspfade automatisch nach einem vorbestimmten Auslöseereignis erfolgen. In einem Beispiel kann das vorbestimmte Auslöseereignis umfassen, dass eine oder mehrere Übertragungspfadkenngrößen eines oder mehrerer Übertragungspfade ein Übertragungspfadkenngrößen-Kriterium erfüllen. Zum Beispiel kann das Übertragungspfadkenngrößen-Kriterium umfassen, dass die eine oder mehreren Übertragungspfadkenngrößen (bspw. ein Jitter, eine Warteschlangenlänge, eine Latenz, eine Paketverlustrate oder eine Kombination davon) eines oder mehrerer Übertragungspfade einen vorbestimmten Schwellenwert überschreiten. In noch anderen Beispielen kann das vorbestimmte Auslöseereignis umfassen, dass die eine oder mehreren Übertragungspfadkenngrößen (bspw. ein Signal-Rausch-Verhältnis, eine Datenrate oder eine Kombination davon) eines oder mehrerer Übertragungspfade unter einen vorbestimmten Schwellenwert fallen. In anderen Beispielen kann das vorbestimmte Auslöseereignis umfassen, dass eine Änderung in der einen oder mehreren Übertragungspfadkenngrößen eines oder mehrerer Übertragungspfade ein Änderungskriterium erfüllt. Zum Beispiel kann das Änderungskriterium umfassen, dass eine Änderung in der einen oder mehreren Übertragungspfadkenngrößen (bspw. eine Änderung des Signal-Rausch-Verhältnisses, der Warteschlangenlänge, der Latenz, der Datenrate oder eine Kombination davon) eines oder mehrerer Übertragungspfade einen vorbestimmten Änderungsschwellenwert der Übertragungspfadkenngröße überschreitet.

Mit anderen Worten: Das vorbestimmte Auslöseereignis kann anhand einer Anforderung an die oben beschriebene Dienstgüte (einschließlich der Dienstgüte im Zusammenhang mit der IT-Sicherheit und/oder funktionalen Sicherheit bzw. Zuverlässigkeit) definiert werden, die ein oder mehrere Übertragungspfade des Multipfad-Kommunikationssystems erfüllen sollten. In manchen Fällen kann eine Applikation auf der Senderseite, die über entsprechende Übertragungspfade kommunizieren kann (oder möchte), einen Verbindungswunsch an den adaptiven Multipfad-Scheduler und/oder an einer entsprechenden Komponente des Senders melden (eventuell unter Angabe der gewünschten oder notwendigen QoS-Parameter). In manchen Fällen kann das vorbestimmte Auslöseereignis Informationen über einen vorbestimmten Wert der Netzwerkkenngröße (bspw. des Netzwerklastparameters) enthalten, oberhalb dessen (oder unterhalb dessen) das adaptive Auswählen durchgeführt werden sollte.

In den vorliegenden Techniken kann der mindestens einen Netzwerkkenngröße des Kommunikationsnetzwerks ein erstes vorbestimmtes Netzwerkkenngröße-Kriterium und ein zweites vorbestimmtes Netzwerkkenngröße-Kriterium zugeordnet werden. Zum Beispiel kann das erste vorbestimmte Netzwerkkenngröße-Kriterium 21 umfassen, dass der mindestens eine Netzwerkkenngröße des Kommunikationsnetzwerks unter einen ersten vorbestimmten Schwellenwert fällt. Darüber hinaus kann das zweite vorbestimmte Netzwerkkenngröße-Kriterium 22 umfassen, dass die mindestens eine Netzwerkkenngröße des Kommunikationsnetzwerks unter einen zweiten vorbestimmten Schwellenwert fällt, wobei der zweite vorbestimmte Schwellenwert größer als der erste vorbestimmte Schwellenwert ist. Wie oben bereits beschrieben, kann bspw. ein Netzwerklastparameter als eine solche Netzwerkkenngröße ausgewählt werden. In manchen Beispielen kann der Netzwerklastparameter eine Netzwerkbelastung im Kommunikationsnetzwerk im Verhältnis zu einer vorhandenen Netzwerkkapazität des Kommunikationsnetzwerks darstellen. Der Netzwerklastparameter kann bspw. das Verhältnis zwischen der Netzwerkbelastung im Kommunikationsnetzwerk und der vorhandenen Netzwerkkapazität sein. Die Netzwerkbelastung kann bspw. zu einem bestimmten Zeitpunkt berechnet werden, wenn die Datenpakete von einem oder mehreren Sendern unter Verwendung entsprechender Scheduling-Schemen übertragen werden, z.B. bevor das adaptive Auswählen des ersten Aspekts durchgeführt wird (ein Scheduling-Schema eines Senders kann sich von einem Scheduling-Schema eines anderen Senders unterscheiden oder gleich sein). In anderen Beispielen kann eine Netzwerkbelastung als ein Mittelwert von Netzwerkbelastungen über ein vorbestimmtes Zeitintervall berechnet werden. Darüber hinaus kann die Netzwerkkapazität eine Menge des Datenverkehrs über die Übertragungspfade repräsentieren, die das Kommunikationsnetzwerk zu einem bestimmten Zeitpunkt bewältigen kann (bspw. können Datenpakete von einem oder mehreren Sendern mit einer vorbestimmten Dienstgüte übertragen werden).

In manchen Beispielen kann die Netzwerkbelastung proportional zu einer Anzahl von Sendern $n$ in dem Multipfad-Kommunikationssystem sein, die in Betrieb sind (mit anderen Worten, die Sender, die an der Datenpaketübertragung beteiligt sind). Zudem kann die Netzwerkbelastung proportional zu einem Mittelwert von Datenraten s sein, mit denen die Sender (bspw. ihre Applikationen) Datenpakete über die jeweiligen Übertragungspfade übertragen. In manchen Fällen kann die Netzwerkbelastung proportional zu einer gemittelten Anzahl von der Wiederholungsübertragungen (engl. "retransmissions") $t$ auf den Übertragungspfaden des Multipfad-Kommunikationssystems sein, wobei die Wiederholungsübertragung auf einem Übertragungsweg die Anzahl der erforderlichen Wiederholungsübertragungen repräsentiert, wenn das Datenpaket auf dem Übertragungsweg gesendet wird. In manchen Fällen kann die Netzwerkkapazität r proportional zu einem Mittelwert von einer Summe der Übertragungskapazitäten der Übertragungspfade sein, wobei eine Übertragungskapazität eines Übertragungspfades (einschließlich bspw. der Empfängerseite und/oder Senderseite) eine Übertragungsrate darstellt, welche der Übertragungspfad für die Datenpaketübertragung gewährleisten kann. In einem oder mehreren der oben genannten Fälle kann die Mittelung bspw. über mehrere (z.B. alle) an der Datenpaketübertragung beteiligten Sender des Multipfad-Kommunikationssystems und/oder über ein entsprechendes Zeitintervall der Datenpaketübertagung durchgeführt werden. In einem Beispiel lässt sich der Netzwerklastparameter $L$ wie folgt definieren:

$$L = \alpha \cdot \frac{s^a \cdot n^b \cdot (\beta + t^c)}{r^d}$$

wobei $\alpha, \beta, a, b, c$ und $d$ die vorgegebenen Faktoren sind. Denkbar ist, dass diese Faktoren die folgende beispielhafte Liste von Werten annehmen: $\alpha = 1.1$, $\beta = 1, a = 1, b = 2, c = 1$ und $d = 1$.

In den vorliegenden Techniken kann der Schritt "das adaptive Auswählen" das adaptive Auswählen 310 eines ersten Scheduling-Schemas "LB; 30a" für die Datenpaketübertagung umfassen, wenn die mindestens eine Netzwerkkenngröße das erste vorbestimmte Netzwerkkenngröße-Kriterium 21 nicht erfüllt und das zweite vorbestimmte Netzwerkkenngröße-Kriterium 22 nicht erfüllt. Zum Beispiel kann der Schritt "das adaptive Auswählen" das adaptive Auswählen des ersten Scheduling-Schemas "LB; 30a" für die Datenpaketübertragung umfassen, wenn die mindestens eine Netzwerkkenngröße den ersten vorbestimmten Schwellenwert und den zweiten vorbestimmten Schwellenwert 21; 22 überschreitet (siehe auch obige Diskussionen). Wie oben bereits erörtert, kann z.B. der Netzwerklastparameter als die Netzwerkkenngröße ausgewählt werden. Im Bespiel von **Fig.**

**4** kann das erste vorbestimmte Netzwerkkenngröße-Kriterium 21 in der Raute des Flussdiagramms 11 als eine Ungleichung in Bezug auf den Netzwerklastparameter formuliert werden, der kleiner als der erste vorbestimmte Schwellenwert ist, während das erste vorbestimmte Netzwerkkenngröße-Kriterium 22 in der Raute des Flussdiagramms 11 als eine Ungleichung in Bezug auf den Netzwerklastparameter formuliert werden kann, der kleiner als der zweite vorbestimmte Schwellenwert ist. In der vorliegenden Offenbarung kann das erste Scheduling-Schema "LB; 30a" das oben eingeführte Lastverteilung-Schema (LB) sein, wenn jedes Paket einzeln nur über einen Übertragungspfad übertragen wird (sh. **Fig. 3a**). In manchen Fällen kann das LB-Schema vorteilhaft sein, wenn der Netzwerklastparameter die beiden vorbestimmten Schwellenwerte überschreitet, da dieses Schema eine Verringerung des Datenverkehrs pro Übertragungspfad ermöglichen kann, indem die Datenpakete auf die verschiedenen Übertragungspfade verteilt werden. Darüber hinaus kann das LB-Schema bei Bedarf Interpaketzeiten erhöhen (bspw. verdoppeln wie bei dem Round-Robin-Verfahren, z.B. bei einer zyklischen Datenpaketübertragung für die zwei Übertragungspfade), um die Warteschlangenlänge auf der Senderseite zu verringern.

Die Techniken der vorliegenden Offenbarung können weiterhin das Auswählen 320 eines zweiten Scheduling-Schemas "PD; 31a" für die Datenpaketübertagung umfassen, wenn die mindestens eine Netzwerkkenngröße das erste vorbestimmte Netzwerkkenngröße-Kriterium 21 nicht erfüllt und das zweite vorbestimmte Netzwerkkenngröße-Kriterium 22 erfüllt (bspw., wenn die mindestens eine Netzwerkkenngröße den ersten vorbestimmten Schwellenwert überschreitet und unter dem zweiten vorbestimmten Schwellenwert liegt), und wenn das bestimmte Signal-Rausch-Verhältnis (SRV) von Datenpaketen des Übertragungspfades (z.B. eines ersten Übertragungspfades eines Senders, eines zweiten Übertragungspfades des Senders, oder eines anderen Übertragungspfades, der sich von dem ersten und zweiten Übertragungspfad des Senders unterscheidet oder eine Kombination davon) ein erstes vorbestimmtes Kriterium 23 erfüllt (dieses Kriterium ist in **Fig. 4** in der Raute mit der Referenznummer 23 schematisch dargestellt). In einem Beispiel kann das bestimmte SRV des Übertragungspfades ein SRV-Mittelwert des Übertragungspfades sein, der durch Mittelung der Signal-Rausch-Verhältnisse einer vorgegebenen Anzahl von Datenpaketen (bspw. 10 Datenpakete oder mehr, 50 Datenpakte oder mehr, 100 Datenpakete oder mehr), die über diesen Übertragungspfad übertragen wurden, berechnet wird. In anderen Beispielen kann das bestimmte SRV des Übertragungspfades ein SRV-Mittelwert des Übertragungspfades sein, der durch Mittelung der Signal-Rausch-Verhältnisse, die über diesen Übertragungspfad innerhalb eines vorgegebenen Zeitintervalls (bspw. 1 ms oder mehr, 10 ms oder mehr, 100 ms oder mehr) übertragen wurden, berechnet wird. In manchen Fällen können die Signal-Rausch-Verhältnisse eines oder mehrer (z.B. aller) Übertragungspfade bestimmt werden, die sich von einem Sender zu den jeweiligen Empfängern erstrecken. Auf diese Art und Weise können bspw. die Signal-Rausch-Verhältnisse für mehrere (z.B. alle) Sender bestimmt werden.

In den vorliegenden Techniken kann das erste vorbestimmte Kriterium umfassen, dass das bestimmte Signal-Rausch-Verhältnis (SRV) von Datenpaketen des Übertragungspfades unter einen SRV-Schwellenwert fällt (siehe nachfolgende Erläuterungen zur Berechnung des SRV-Schwellenwert). Zurück zu dem Beispiel von **Fig. 2**: Die Signal-Rausch-Verhältnisse im oben definierten Sinne können für alle drei Übertragungspfade "2; Pfad1-Pfad3" bestimmt werden. Das erste vorbestimmte Kriterium kann in diesem Ausführungsbeispiel besagen, dass das erste vorbestimmte Kriterium erfüllt ist, wenn das SRV eines dieser drei Übertragungspfade unter den SRV-Schwellenwert fällt. In anderen Beispielen müssen zwei oder alle der drei bestimmten Signal-Rausch-Verhältnisse unter den SRV-Schwellenwert fallen, um das erste vorbestimmte Kriterium zu erfüllen.

Des Weiteren kann das Verfahren des ersten Aspekts das Berechnen eines SRV-Netzwerkkennwertes umfassen, der Signal-Rausch-Verhältnisse von Datenpaketen aus der Mehrzahl von Datenpaketen charakterisiert, die über das Kommunikationsnetzwerk des Multipfad-Kommunikationssystems übertragen werden. In manchen Fällen kann der SRV-Netzwerkkennwert ein SRV-Mittelwert von Signal-Rausch-Verhältnissen der Datenpakete aus der Mehrzahl von Datenpaketen sein, die über das Kommunikationsnetzwerk des Multipfad-Kommunikationssystems (oder, mit anderen Worten, über die Übertragungspfade, die das Kommunikationsnetzwerk umfasst) übertragen werden. Dieser SRV-Mittelwert, der ein globaler SRV des Kommunikationssystems darstellt, kann z.B. als ein Mittelwert über die bestimmten (oben beschriebenen) SRV-Mittelwerte der mehreren (bspw. aller) Übertragungspfade des Multipfad-Kommunikationssystems berechnet werden.

In dem nächsten Schritt kann das Verfahren des ersten Aspekts das Berechnen des SRV-Schwellenwertes basierend auf dem berechneten SRV-Kennwert umfassen. In manchen Fällen kann der SRV-Schwellenwert als eine Differenz zwischen dem SRV-Netzwerkkennwert und einem vorgegebenen SRV-Verschiebungswert berechnet werden. Der vorgegebene SRV-Verschiebungswert kann bspw. aus einem Intervall von 0 dB bis 5 dB ausgewählt werden. Denkbar ist, dass der SRV-Verschiebungswert die folgende, nicht erschöpfende Liste von Werten annimmt: 0.5 dB, 1.0 dB, 1.5 dB, 2.0 dB, 2.5 dB, 3.0 dB, 3.5 dB, 4.0 dB oder 4.5 dB.

In der vorliegenden Offenbarung kann das zweite Scheduling-Schema "PD; 31a" das oben eingeführte Paketduplizierung-Schema (PD) sein, bei dem das Datenpaket repliziert und über einen Übertragungspfad übertragen wird, während sein Duplikat über einen oder mehrere andere Übertragungspfade (bspw. desselben Senders) übertragen wird. Bei diesem Schema muss der Empfänger auf das erste ankommende Duplikat des Datenpakets warten (oder auf das Datenpaket selbst, wenn es früher ankommt), was die Latenz verringern kann. Außerdem kann der Empfänger auf das zweite übertragene Duplikat zurückgreifen, falls ein Datenpaket verloren geht, was die Zuverlässigkeit der Datenpaketübertragen erhöhen kann.

In dem anderen Fall, wenn die mindestens eine Netzwerkkenngröße das erste vorbestimmte Netzwerkkenngröße-Kriterium 21 nicht erfüllt und das zweite vorbestimmte Netzwerkkenngröße-Kriterium 22 erfüllt (bspw., wenn die mindestens eine Netzwerkkenngröße den ersten vorbestimmten Schwellenwert überschreitet und unter dem zweiten vorbestimmten Schwellenwert liegt), und wenn das bestimmte Signal-Rausch-Verhältnis von Datenpaketen des Übertragungspfades das erste vorbestimmte Kriterium 23 (bspw. in Bezug auf den oben im Detail beschriebenen SRV-Schwellenwert) nicht erfüllt, kann das Verfahren des ersten Aspekts das Auswählen 330 des ersten Scheduling-Schemas "LB; 30b" für die Datenpaketübertagung umfassen. Hier kann das erste Scheduling-Schema "LB; 30b" bspw. das oben eingeführte Lastverteilung-Schema (LB) sein.

Die Techniken der vorliegenden Offenbarung können weiterhin das Berechnen einer kollektiven Warteschlangenlänge umfassen, die die bestimmten Warteschlangenlängen von Datenpaketen auf den mindestens zwei Übertragungspfaden charakterisiert, wenn die mindestens eine Netzwerkkenngröße (bspw. der oben eingeführte Netzwerklastparameter) das erste vorbestimmte Netzwerkkenngröße-Kriterium 21 erfüllt (bspw., wenn die mindestens eine Netzwerkkenngröße unter dem ersten vorbestimmten Schwellenwert liegt). In einem Beispiel kann die kollektive Warteschlangenlänge eine gewichtete Summe der bestimmten Warteschlangenlängen von Datenpaketen sein (bspw. mit den Gewichtfaktoren gleich eins), die über die mindestens zwei Übertragungspfade übertragen werden. In manchen Fällen kann die kollektive Warteschlangenlänge eine Summe der bestimmten Warteschlangenlängen von Datenpaketen sein, die über die Übertragungspfade (bspw. alle Übertragungspfade) übertragen werden, die sich von einem Sender zu den jeweiligen Empfängern erstrecken. In manchen Fällen kann die Warteschlangenlänge für den Übertragungspfad (bspw. für jeden Übertragungspfad) als eine Warteschlangenlänge innerhalb eines vorgegebenen Zeitintervalls bestimmt werden (bspw. kann ein maximaller Messwert der Warteschlangenlänge innerhalb dieses Zeitintervalls als die Warteschlangenlänge für den jeweiligen Übertragungspfad genommen werden). Auf diese Art und Weise können bspw. die Warteschlangenlänge für mehrere (z.B. alle) Sender bestimmt werden.

In den vorliegenden Techniken kann der Schritt "das adaptive Auswählen des Scheduling-Schemas" das Auswählen 340 des zweiten Scheduling-Schemas "PD; 31b" für die Datenpaketübertagung umfassen, wenn die berechnete kollektive Warteschlangenlänge ein zweites vorbestimmtes Kriterium 24 erfüllt (dieses Kriterium ist in **Fig. 4** in der Raute mit der Referenznummer 24 schematisch dargestellt), und wenn die bestimmte Korrelation ein drittes vorbestimmtes Kriterium 25 erfüllt (dieses Kriterium ist in **Fig. 4** in der Raute mit der Referenznummer 25 schematisch gezeigt). In diesem Zusammenhang kann in manchen Fällen die Korrelation zwischen einem oder mehreren Übertragungspfadkenngrößen eines ersten Übertragungspfads und einem oder mehreren Übertragungspfadkenngrößen eines zweiten Übertragungspfads desselben Senders, oder eines ersten Übertragungspfads und eines anderen Übertragungspfads desselben Senders, der sich von dem ersten und zweiten Übertragungspfad unterscheidet, bestimmt werden. In noch anderen Fällen können die Korrelationen zwischen einem oder mehreren Übertragungspfadkenngrößen aller Übertragungspfade, die Datenpakete von demselben Sender zu den Empfängern übertragen, bestimmt werden. Sodann kann eine maximale Korrelation aus den bestimmten Korrelationen genommen werden, um zu prüfen, ob sie das dritte vorbestimmte Kriterium 25 erfüllt.

In den Techniken der vorliegenden Offenbarung kann das zweite vorbestimmte Kriterium 24 umfassen, dass die berechnete kollektive Warteschlangenlänge unter einen vorbestimmten Warteschlange-Schwellenwert fällt. Darüber hinaus kann das dritte vorbestimmte Kriterium 25 umfassen, dass die bestimmte Korrelation unter einen vorbestimmten Korrelation-Schwellenwert fällt. Wie oben bereits erwähnt, kann die Korrelation anhand der Pearsonschen Korrelationskoeffizient beschrieben werden. Der Korrelation-Schwellenwert kann bspw. aus einem Intervall von -1.0 bis 1.0 ausgewählt werden. Denkbar ist, dass die Korrelation die folgende, nicht erschöpfende Liste von Werten annimmt: -0.9, -0.5, -0.2, -0.1, 0.0, 0.1, 0.2, 0.5 oder 0.9. Wie oben bereits diskutiert, kann es sich in manchen Beispielen um die Übertragungspfade desselben Sender handeln, um das Scheduling-Schemas für diesen Sender adaptive auszuwählen. Darüber hinaus kann bspw. das oben eingeführte Paketduplizierung-Schema (PD) als das zweite Scheduling-Schema "PD; 31b" ausgewählt werden.

In dem anderen Fall, wenn die berechnete kollektive Warteschlangenlänge das zweite vorbestimmte Kriterium 24 erfüllt, und die bestimmte Korrelation das dritte vorbestimmte Kriterium 25 nicht erfüllt (z.B., wenn die bestimmte Korrelation den vorbestimmten Korrelation-Schwellenwert überschreitet), kann das Verfahren des ersten Aspekts das Auswählen 350 eines dritten Scheduling-Schemas "PS; 32" für die Datenpaketübertagung umfassen. In der vorliegenden Offenbarung kann das dritte Scheduling-Schema "PS; 32" das oben eingeführte Paketfragmentierung-Scheme (PS) für die Datenpaketübertragung sein, bei dem das Datenpaket fragmentiert wird und seine Fragmente über einen oder mehrere andere Übertragungspfade übertragen werden (sh. **Fig. 3c** und die obigen Diskussionen). In manchen Fällen kann das PS-Scheme vorteilhaft sein, weil es eine Verringerung einer Größe von Nutzdaten (engl. "payload") pro Übertragungspfad bereitstellen kann, was zur Reduzierung von Latenzen führen kann. So kann bspw. die Größe der über die zwei Übertragungspfade übertragenen Datenpakete im Beispiel von **Fig. 3c** halbiert werden.

Der Schritt "das adaptive Auswählen des Scheduling-Schemas" der vorliegenden Offenbarung kann zuletzt das Auswählen 360 des ersten Scheduling-Schemas "LB; 30c" (bspw. das oben betriebene Lastverteilung-Schema (LB)) für die Datenpaketübertagung umfassen, wenn die mindestens eine Netzwerkkenngröße das erste vorbestimmte Netzwerkkenngröße-Kriterium 21 erfüllt (bspw., wenn die mindestens eine Netzwerkkenngröße unter dem ersten vorbestimmten Schwellenwert liegt) und wenn die berechnete kollektive Warteschlangenlänge das zweite vorbestimmte Kriterium 24 nicht erfüllt.

Ein zweiter allgemeiner Aspekt der vorliegenden Offenbarung betrifft ein Computer-Programm, welches dafür ausgelegt ist, um das Verfahren gemäß dem ersten allgemeinen Aspekt der vorliegenden Offenbarung auszuführen. Die vorliegende Offenbarung betrifft auch ein computer-lesbares Medium (z.B. ein maschinenlesbares Speichermedium wie beispielweise ein optisches Speichermedium oder Festspeicher, z.B. FLASH-Speicher) und Signale, die das Computer-Programm der vorliegenden Offenbarung speichern oder codieren.

Ein dritter allgemeiner Aspekt der vorliegenden Offenbarung betrifft einen adaptiven Multipfad-Scheduler 5 eines Multipfad-Kommunikationssystems 1, das dazu ausgelegt ist, um das Verfahren gemäß dem ersten allgemeinen Aspekt der vorliegenden Offenbarung auszuführen und/oder das Computer-Programm gemäß dem zweiten allgemeinen Aspekt auszuführen.

In manchen Beispielen kann die Entscheidung, welches Scheduling-Schema des ersten Aspekts bei welchem Sender angewendet wird, in einem in **Fig. 5** dargestellten Multipfad-Scheduler 5 getroffen werden, der verschiedene Übertragungspfadkenngröße aus den unteren MAC-Schichten (bspw. MAC-Mittelschicht, MAC-Unterschicht oder ähnliche) verwendet, wie z.B. Warteschlangenlänge, SRV oder Konfliktfenster (bspw. aktuelle Werte von diesen Größen). In diesem Beispiel ist die MAC-Oberschicht allen Übertragungspfaden gemeinsam zugeordnet (bspw. denen, die sich von einem Sender zu den jeweiligen Empfängern erstrecken), während die unteren MAC-Schichten einzelnen Übertragungspfaden zugeordnet sind (z.B. zwei Übertragungspfade 2, wie in **Fig. 5** gezeigt). In anderen Beispielen kann eine andere Schicht allen Übertragungspfaden gemeinsam zugeordnet werden. Die vom Multipfad-Scheduler getroffene Entscheidung kann im Beispiel von **Fig. 5** in der MAC-Oberschicht angewendet werden, und die einzelnen Datenpakete (und/oder deren Fragmente) können gemäß dem Scheduling-Schema auf die einzelnen unteren MAC-Schichten verteilt werden. Darüber hinaus kann in manchen Fällen der Multipfad-Scheduler 5 Informationen über das entsprechende Modulations- und Kodierungsschema, das auf einen bestimmten Übertragungspfad angewendet wird, an die MAC-Unterschicht übermitteln.

Ein vierter allgemeiner Aspekt der vorliegenden Offenbarung betrifft ein Multipfad-Kommunikationssystem, das einen adaptiven Multipfad-Scheduler 5 gemäß dem dritten Aspekt umfasst. Darüber hinaus umfasst das Multipfad-Kommunikationssystem gemäß dem vierten Aspekt einen Sender 3, der dazu ausgelegt ist, um eine Mehrzahl von Datenpaketen zu dem Empfänger zu übertragen. Der Sender des vierten Aspekts kann mit dem Empfänger über zwei oder mehr Übertragungspfade 2 verbunden werden. Das Multipfad-Kommunikationssystem des vierten Aspektes ist dazu ausgelegt, um das Verfahren gemäß dem ersten allgemeinen Aspekt der vorliegenden Offenbarung auszuführen.

## Patentansprüche

1. Verfahren zum adaptiven Auswählen eines Scheduling-Schemas (LB; PD; PS) für eine Datenpaketübertragung in einem Multipfad-Kommunikationssystem (1), wobei das Verfahren folgende Schritte umfasst:

   das Bestimmen (100) von zumindest zwei Übertragungspfadkenngrößen für jeden Übertragungspfad von mindestens zwei Übertragungspfaden (2) aus den zwei oder mehr Übertragungspfaden für eine Mehrzahl von Datenpaketen,
   wobei die Mehrzahl von Datenpaketen über die zwei oder mehr Übertragungspfade des Multipfad-Kommunikationssystems (1) übertragen wird; das Bestimmen (200) einer Korrelation zwischen mindestens einer Übertragungspfadkenngröße von zumindest zwei Übertragungspfadkenngrößen eines Übertragungspfades und einer entsprechenden Übertragungspfadkenngröße von zumindest zwei Übertragungspfadkenngrößen eines oder mehrerer anderer Übertragungspfade aus den zwei oder mehr Übertragungspfaden für die Mehrzahl von Datenpaketen;
   das adaptive Auswählen (300) eines Scheduling-Schemas (LB; PD; PS) für eine Datenpaketübertragung über die zwei oder mehr Übertragungspfade mindestens basierend auf den bestimmten Übertragungspfadkenngrößen und der Korrelation,
   wobei das Verfahren weiter das Bestimmen (210) mindestens einer Netzwerkkenngröße eines Kommunikationsnetzwerkes des Multipfad-Kommunikationssystems (1) umfasst,
   wobei das adaptive Auswählen (300) weiterhin basierend auf der mindestens einen Netzwerkkenngröße des Kommunikationsnetzwerkes geschieht,

**dadurch gekennzeichnet, dass** die Korrelation das Ausmaß beschreibt, in dem sich eine oder mehrere Übertragungspfadkenngrößen eines Übertragungspfades ändern, wenn Datenpakete über einen anderen Übertragungspfad übertragen werden, der durch eine entsprechende Übertragungspfadkenngröße charakterisiert ist,

wobei die zumindest zwei Übertragungspfadkenngrößen eine jeweilige Warteschlangenlänge und ein Signal-Rausch-Verhältnis (SRV) von Datenpaketen aus der Mehrzahl von Datenpaketen umfassen, die über den entsprechenden Übertragungspfad von mindestens zwei Übertragungspfaden (2) übertragen werden, und wobei die mindestens eine Netzwerkkenngröße des Kommunikationsnetzwerkes ein Netzwerklastparameter ist, der eine Netzwerkbelastung beschreibt.

2. Verfahren nach Anspruch 1, wobei das adaptive Auswählen (300) des Scheduling-Schemas (LB; PD; PS) für die Datenpaketübertragung über die zwei oder mehr Übertragungspfade nach einem Zeitplan (20) oder automatisch nach einem vorbestimmten Auslöseereignis erfolgt,

wobei der Zeitplan umfasst, dass eine vorbestimmte Anzahl von Datenpaketen aus der Mehrzahl von Datenpaketen übertragen werden sollte, bevor das adaptive Auswählen (300) durchgeführt wird,

wobei das vorbestimmte Auslöseereignis umfasst, dass eine oder mehrere Übertragungspfadkenngrößen eines oder mehrerer Übertragungspfade ein Übertragungspfadkenngrößen-Kriterium erfüllen.

3. Verfahren nach Anspruch 1 oder 2, wobei der mindestens einen Netzwerkkenngröße des Kommunikationsnetzwerks ein erstes vorbestimmtes Netzwerkkenngröße-Kriterium und ein zweites vorbestimmtes Netzwerkkenngröße-Kriterium zugeordnet wird,

wobei das erste vorbestimmte Netzwerkkenngröße-Kriterium (21) umfasst, dass der mindestens eine Netzwerkkenngröße des Kommunikationsnetzwerks unter einen ersten vorbestimmten Schwellenwert fällt,

wobei das zweite vorbestimmte Netzwerkkenngröße-Kriterium (22) umfasst, dass die mindestens eine Netzwerkkenngröße des Kommunikationsnetzwerks unter einen zweiten vorbestimmten Schwellenwert fällt,

wobei der zweite vorbestimmte Schwellenwert größer als der erste vorbestimmte Schwellenwert ist.

4. Verfahren nach Anspruch 3, wobei das adaptive Auswählen (300) des Scheduling-Schemas (LB; PD; PS) das adaptive Auswählen (310) eines ersten Scheduling-Schemas (LB; 30a) für die Datenpaketübertragung umfasst, wenn die mindestens eine Netzwerkkenngröße das erste vorbestimmte Netzwerkkenngröße-Kriterium (21) nicht erfüllt und das zweite vorbestimmte Netzwerkkenngröße-Kriterium (22) nicht erfüllt, wobei das erste Scheduling-Schema (LB; 30a) ein Lastverteilung-Schema (LB) ist.

5. Verfahren nach Anspruch 3, wobei die zumindest zwei Übertragungspfadkenngrößen eines Übertragungspfades von mindestens zwei Übertragungspfaden (2) eine jeweilige Warteschlangenlänge und ein Signal-Rausch-Verhältnis (SRV) von Datenpaketen aus der Mehrzahl von Datenpaketen umfassen, die über den Übertragungspfad von mindestens zwei Übertragungspfaden (2) übertragen werden, wobei das adaptive Auswählen (300) des Scheduling-Schemas (LB; PD; PS) die folgenden Schritte umfasst, wenn die mindestens eine Netzwerkkenngröße das erste vorbestimmte Netzwerkkenngröße-Kriterium (21) nicht erfüllt und das zweite vorbestimmte Netzwerkkenngröße-Kriterium (22) erfüllt:

das Auswählen (320) eines zweiten Scheduling-Schemas (PD; 31a) für die Datenpaketübertragung, wenn das bestimmte Signal-Rausch-Verhältnis von Datenpaketen des Übertragungspfades ein erstes vorbestimmtes Kriterium (23) erfüllt,

und anderenfalls, wenn das bestimmte Signal-Rausch-Verhältnis von Datenpaketen des Übertragungspfades das erste vorbestimmte Kriterium (23) nicht erfüllt,

das Auswählen (330) eines ersten Scheduling-Schemas (LB; 30b) für die Datenpaketübertragung,

wobei das erste Scheduling-Schema (LB; 30b) ein Lastverteilung-Schema (LB) ist,

wobei das zweite Scheduling-Schema (PD; 31a) ein Paketduplizierung-Schema (PD) ist.

6. Verfahren nach Anspruch 5, wobei das erste vorbestimmte Kriterium (23) umfasst, dass das bestimmte Signal-Rausch-Verhältnis, SRV, von Datenpaketen des Übertragungspfades unter einen SRV-Schwellenwert fällt, und wobei das Verfahren die folgenden Schritte umfasst:

das Berechnen eines SRV-Netzwerkkennwertes, der Signal-Rausch-Verhältnisse von Datenpaketen aus der Mehrzahl von Datenpaketen charakterisiert, die über das Kommunikationsnetzwerk des Multipfad-Kommunikationssystems (1) übertragen werden;

das Berechnen des SRV-Schwellenwertes basierend auf dem berechneten SRV-Kennwert.

7. Verfahren nach Anspruch 3, wobei die zumindest zwei Übertragungspfadkenngrößen eines Übertragungspfades von mindestens zwei Übertragungspfaden (2) eine jeweilige Warteschlangenlänge und ein Signal-Rausch-Verhältnis (SRV) von Datenpaketen aus der Mehrzahl von Datenpaketen umfassen, die über den Übertragungspfad von mindestens zwei Übertragungspfaden (2) übertragen werden, wobei das Verfahren das Berechnen einer kollektiven Warteschlangenlänge umfasst, die die bestimmten Warteschlangenlängen von Datenpaketen auf den mindestens zwei Übertragungspfaden (2) charakterisiert, wenn die mindestens eine Netzwerkkenngröße das erste vorbestimmte Netzwerkkenngröße-Kriterium (21) erfüllt.

8. Verfahren nach Anspruch 7, wobei das adaptive Auswählen (300) des Scheduling-Schemas (LB; PD; PS) die folgenden Schritte umfasst, wenn die berechnete kollektive Warteschlangenlänge ein zweites vorbestimmtes Kriterium (24) erfüllt:

das Auswählen (340) eines zweiten Scheduling-Schemas (PD; 31b) für die Datenpaketübertragung, wenn die bestimmte Korrelation ein drittes vorbestimmtes Kriterium (25) erfüllt, und anderenfalls das Auswählen (350) eines dritten Scheduling-Schemas (PS; 32) für die Datenpaketübertragung, wobei das zweite vorbestimmte Kriterium (24) umfasst, dass die berechnete kollektive Warteschlangenlänge unter einen vorbestimmten Warteschlange-Schwellenwert fällt, wobei das dritte vorbestimmte Kriterium (25) umfasst, dass die bestimmte Korrelation unter einen vorbestimmten Korrelation-Schwellenwert fällt, wobei das zweite Scheduling-Schema (PD; 31b) ein Paketduplizierung-Schema (PD) ist, wobei das dritte Scheduling-Schema (PS; 32) ein Paketfragmentierung-Schema (PS) ist.

9. Verfahren nach Anspruch 8, wobei das adaptive Auswählen (300) des Scheduling-Schemas (LB; PD; PS) das Auswählen (360) eines ersten Scheduling-Schemas (LB; 30c) für die Datenpaketübertragung umfasst, wenn die mindestens eine Netzwerkkenngröße das erste vorbestimmte Netzwerkkenngröße-Kriterium (21) erfüllt und wenn die berechnete kollektive Warteschlangenlänge ein zweites vorbestimmtes Kriterium (24) nicht erfüllt, wobei das erste Scheduling-Schema (LB; 30c) ein Lastverteilung-Schema (LB) ist,
wobei das zweite vorbestimmte Kriterium (24) umfasst, dass die berechnete kollektive Warteschlangenlänge unter einen vorbestimmten Warteschlange-Schwellenwert fällt.

10. Ein Computer-Programm, das dafür ausgelegt ist, um das Verfahren nach einem der vorhergehenden Ansprüche 1 bis 9 auszuführen.

11. Adaptiver Multipfad-Scheduler (5) eines Multipfad-Kommunikationssystems (1), das dazu ausgelegt ist, um das Verfahren nach einem der vorhergehenden Ansprüche 1 bis 9 auszuführen und/oder das Computer-Programm nach Anspruch 10 auszuführen.

12. Ein Multipfad-Kommunikationssystem (1) umfassend:

einen adaptiven Multipfad-Scheduler (5) nach Anspruch 11;
einen Sender (3), der dazu ausgelegt ist, um eine Mehrzahl von Datenpaketen zu dem Empfänger zu übertragen;
einen Empfänger (4),
wobei der Sender mit dem Empfänger über zwei oder mehr Übertragungspfade (2) verbunden ist,
wobei das Multipfad-Kommunikationssystem (1) dazu ausgelegt ist, um das Verfahren nach einem der vorhergehenden Ansprüche 1 bis 9 auszuführen.

## Claims

1. Method for adaptively selecting a scheduling scheme (LB; PD; PS) for a data packet transmission in a multi-path communication system (1), the method comprising the following steps:

determining (100) at least two transmission path characteristic variables for each transmission path of at least two transmission paths (2) from the two or more transmission paths for a plurality of data packets,
the plurality of data packets being transmitted via the two or more transmission paths of the multi-path communication system (1);
determining (200) a correlation between at least one transmission path characteristic variable of at least two transmission path characteristic variables of a transmission path and a corresponding transmission path characteristic variable of at least two transmission path characteristic variables of one or more other transmission paths from the two or more transmission paths for the plurality of data packets;

adaptively selecting (300) a scheduling scheme (LB; PD; PS) for a data packet transmission via the two or more transmission paths on the basis of at least the determined transmission path characteristic variables and the correlation,

the method further comprising determining (210) at least one network characteristic variable of a communication network of the multipath communication system (1),

the adaptive selection (300) furthermore taking place on the basis of the at least one network characteristic variable of the communication network, **characterized in that** the correlation describes the extent to which one or more transmission path characteristic variables of a transmission path change when data packets are transmitted via another transmission path, which is **characterized by** a corresponding transmission path characteristic variable,

the at least two transmission path characteristic variables comprising a respective queue length and a signal-to-noise ratio (SNR) of data packets from the plurality of data packets that are transmitted via the corresponding transmission path of at least two transmission paths (2), and

the at least one network characteristic variable of the communication network being a network load parameter that describes a network load.

2. Method according to Claim 1, the adaptive selection (300) of the scheduling scheme (LB; PD; PS) for the data packet transmission via the two or more transmission paths being performed according to a schedule (20) or automatically after a predetermined trigger event,

a facet of the schedule being that a predetermined number of data packets from the plurality of data packets should be transmitted before the adaptive selection (300) is carried out,

a facet of the predetermined trigger event being that one or more transmission path characteristic variables of one or more transmission paths meet a transmission path characteristic variable criterion.

3. Method according to Claim 1 or 2, the at least one network characteristic variable of the communication network being assigned a first predetermined network characteristic variable criterion and a second predetermined network characteristic variable criterion,

a facet of the first predetermined network characteristic variable criterion (21) being that the at least one network characteristic variable of the communication network drops below a first predetermined threshold value,

a facet of the second predetermined network characteristic variable criterion (22) being that the at least one network characteristic variable of the communication network drops below a second predetermined threshold value,

the second predetermined threshold value being greater than the first predetermined threshold value.

4. Method according to Claim 3, the adaptive selection (300) of the scheduling scheme (LB; PD; PS) comprising adaptively selecting (310) a first scheduling scheme (LB; 30a) for the data packet transmission if the at least one network characteristic variable does not meet the first predetermined network characteristic variable criterion (21) and does not meet the second predetermined network characteristic variable criterion (22), the first scheduling scheme (LB; 30a) being a load distribution scheme (LB).

5. Method according to Claim 3, the at least two transmission path characteristic variables of a transmission path of at least two transmission paths (2) comprising a respective queue length and a signal-to-noise ratio (SNR) of data packets from the plurality of data packets that are transmitted via the transmission path of at least two transmission paths (2),

the adaptive selection (300) of the scheduling scheme (LB; PD; PS) comprising the following steps if the at least one network characteristic variable does not meet the first predetermined network characteristic variable criterion (21) and meets the second predetermined network characteristic variable criterion (22):

selecting (320) a second scheduling scheme (PD; 31a) for the data packet transmission if the determined signal-to-noise ratio of data packets of the transmission path meets a first predetermined criterion (23),

and otherwise, if the determined signal-to-noise ratio of data packets of the transmission path does not meet the first predetermined criterion (23),

selecting (330) a first scheduling scheme (LB; 30b) for the data packet transmission,

the first scheduling scheme (LB; 30b) being a load distribution scheme (LB),

the second scheduling scheme (PD; 31a) being a packet duplication scheme (PD).

6. Method according to Claim 5, a facet of the first predetermined criterion (23) being that the determined signal-to-noise ratio, SNR, of data packets of the transmission path drops below an SNR threshold value, and the method comprising the following steps:

calculating an SNR network characteristic value that characterizes signal-to-noise ratios of data packets from the plurality of data packets transmitted via the communication network of the multi-path communication system (1);
calculating the SNR threshold value on the basis of the calculated SNR characteristic value.

7. Method according to Claim 3, the at least two transmission path characteristic variables of a transmission path of at least two transmission paths (2) comprising a respective queue length and a signal-to-noise ratio (SNR) of data packets from the plurality of data packets that are transmitted via the transmission path of at least two transmission paths (2),
the method comprising calculating a collective queue length that characterizes the determined queue lengths of data packets on the at least two transmission paths (2) if the at least one network characteristic variable meets the first predetermined network characteristic variable criterion (21).

8. Method according to Claim 7, the adaptive selection (300) of the scheduling scheme (LB; PD; PS) comprising the following steps if the calculated collective queue length meets a second predetermined criterion (24):

selecting (340) a second scheduling scheme (PD; 31b) for the data packet transmission if the determined correlation meets a third predetermined criterion (25),
and otherwise selecting (350) a third scheduling scheme (PS; 32) for the data packet transmission,
a facet of the second predetermined criterion (24) being that the calculated collective queue length drops below a predetermined queue threshold value,
a facet of the third predetermined criterion (25) being that the determined correlation drops below a predetermined correlation threshold value,
the second scheduling scheme (PD; 31b) being a packet duplication scheme (PD),
the third scheduling scheme (PS; 32) being a packet fragmentation scheme (PS).

9. Method according to Claim 8, the adaptive selection (300) of the scheduling scheme (LB; PD; PS) comprising selecting (360) a first scheduling scheme (LB; 30c) for the data packet transmission if the at least one network characteristic variable meets the first predetermined network characteristic variable criterion (21) and if the calculated collective queue length does not meet a second predetermined criterion (24), the first scheduling scheme (LB; 30c) being a load distribution scheme (LB),
a facet of the second predetermined criterion (24) being that the calculated collective queue length drops below a predetermined queue threshold value.

10. Computer program designed to carry out the method according to one of preceding Claims 1 to 9.

11. Adaptive multi-path scheduler (5) of a multi-path communication system (1) designed to carry out the method according to one of preceding Claims 1 to 9 and/or to execute the computer program according to Claim 10.

12. Multi-path communication system (1) comprising:

an adaptive multi-path scheduler (5) according to Claim 11;
a transmitter (3) designed to transmit a plurality of data packets to the receiver;
a receiver (4),
the transmitter being connected to the receiver via two or more transmission paths (2),
the multi-path communication system (1) being designed to carry out the method according to one of preceding Claims 1 to 9.

**Revendications**

1. Procédé de sélection adaptative d'un schéma de planification (LB ; PD ; PS) pour une transmission de paquets de données dans un système de communication (1) à chemins multiples, le procédé comprenant les étapes suivantes :

la détermination (100) d'au moins deux grandeurs caractéristiques de chemin de transmission pour chaque chemin de transmission d'au moins deux chemins de transmission (2) à partir des deux chemins de transmission ou plus pour une multitude de paquets de données,
la multitude de paquets de données étant transmise par les deux chemins de transmission ou plus du système de communication (1) à chemins multiples ;
la détermination (200) d'une corrélation entre au moins une grandeur caractéristique de chemin de transmission d'au moins deux grandeurs caractéristiques de chemin de transmission et une grandeur caractéristique de chemin de transmission correspondante d'au moins deux grandeurs caractéristiques de chemin de transmission d'un ou de plusieurs autres chemins de transmission à partir des deux chemins de transmission ou plus pour la multitude de paquets de données ;

la sélection adaptative (300) d'un schéma de planification (LB ; PD ; PS) pour une transmission de paquets de données par les deux chemins de transmission ou plus au moins sur la base des grandeurs caractéristiques de chemin de transmission déterminées et de la corrélation,

le procédé comprenant par ailleurs la détermination (210) d'au moins une grandeur caractéristique de réseau d'un réseau de communication du système de communication (1) à chemins multiples,

la sélection adaptative (300) se produisant par ailleurs sur la base de l'au moins une grandeur caractéristique de réseau du réseau de communication, **caractérisé en ce que** la corrélation décrit l'ampleur, selon laquelle une ou plusieurs grandeurs caractéristiques de chemin de transmission d'un chemin de transmission varient lorsque des paquets de données sont transmis par un autre chemin de transmission qui est **caractérisé par** une grandeur caractéristique de chemin de transmission correspondante, les au moins deux grandeurs caractéristiques de chemin de transmission comprenant une file d'attente respective et un rapport signal sur bruit (SRV) de paquets de données issus de la multitude de paquets de données, qui sont transmis par le chemin de transmission correspondant d'au moins deux chemins de transmission (2), et l'au moins une grandeur caractéristique de réseau du réseau de communication étant un paramètre de charge de réseau, qui décrit une charge de réseau.

2. Procédé selon la revendication 1, la sélection adaptative (300) du système de planification (LB ; PD ; PS) pour la transmission de paquets de données par les deux chemins de transmission ou plus étant effectuée selon un calendrier (20) ou automatiquement après un événement déclencheur prédéterminé,

le calendrier comprenant le fait qu'un nombre prédéterminé de paquets de données issus de la multitude de paquets de données devrait être transmis avant que la sélection adaptative (300) ne soit mise en œuvre, l'événement déclencheur prédéterminé comprenant le fait qu'une ou plusieurs grandeurs caractéristiques de chemin de transmission d'un ou de plusieurs chemins de transmission remplissent un critère de grandeurs caractéristiques de chemin de transmission.

3. Procédé selon la revendication 1 ou 2, un premier critère prédéterminé de grandeur caractéristique de réseau et un deuxième critère prédéterminé de grandeur caractéristique de réseau étant associés à l'au moins une grandeur caractéristique de réseau du réseau de communication,

le premier critère prédéterminé (21) de grandeur caractéristique de réseau comprenant le fait que l'au moins une grandeur caractéristique de réseau du réseau de communication devient inférieure à une première valeur de seuil prédéterminée, le deuxième critère prédéterminé (22) de grandeur caractéristique de réseau comprenant le fait que l'au moins une grandeur caractéristique de réseau du réseau de communication devient inférieure à une deuxième valeur de seuil prédéterminée, la deuxième valeur de seuil prédéterminée étant supérieure à la première valeur de seuil prédéterminée.

4. Procédé selon la revendication 3, la sélection adaptative (300) du schéma de planification (LB ; PD ; PS) comprenant la sélection adaptative (310) d'un premier schéma de planification (LB ; 30a) pour la transmission de paquets de données lorsque l'au moins une grandeur caractéristique de réseau ne remplit pas le premier critère prédéterminé (21) de grandeur caractéristique de réseau et ne remplit pas le deuxième critère prédéterminé (22) de grandeur caractéristique de réseau, le premier schéma de planification (LB ; 30a) étant un schéma de répartition de charge (LB).

5. Procédé selon la revendication 3, les au moins deux grandeurs caractéristiques de chemin de transmission d'un chemin de transmission d'au moins deux chemins de transmission (2) comprenant une longueur de file d'attente respective et un rapport signal sur bruit (SRV) de paquets de données issus de la multitude de paquets de données, qui sont transmis par le chemin de transmission d'au moins deux chemins de transmission (2),

la sélection adaptative (300) du schéma de planification (LB ; PD ; PS) comprenant les étapes suivantes lorsque l'au moins une grandeur caractéristique de réseau ne remplit pas le premier critère prédéterminé (21) de grandeur caractéristique de réseau et remplit le deuxième critère prédéterminé (22) de grandeur caractéristique de réseau :
la sélection (320) d'un deuxième schéma de planification (PD ; 31a) pour la transmission de paquets de données lorsque le rapport déterminé signal sur bruit de paquets de données du chemin de transmission remplit un premier critère prédéterminé (23),

et sinon lorsque le rapport déterminé signal sur bruit de paquets de données du chemin de transmission ne remplit pas le premier critère prédéterminé (23),

la sélection (330) d'un premier schéma de planification (LB ; 30b) pour la transmission de paquets de données,

le premier schéma de planification (LB ; 30a) étant un schéma de répartition de charge (LB), le deuxième schéma de planification (PD ; 31a) étant un schéma de duplication de paquets (PD).

6. Procédé selon la revendication 5, le premier critère prédéterminé (23) comprenant le fait que le rapport déterminé signal sur bruit (SRV) de paquets de données du chemin de transmission devient inférieur à une valeur de seuil de SRV et le procédé comprenant les étapes suivantes :

le calcul d'une valeur caractéristique de réseau de SRV ; qui caractérise des rapports de signal sur bruit de paquets de données issus de la multitude de paquets de données, qui sont transmis par le réseau de communication du système de communication (1) à chemins multiples ;

le calcul de la valeur de seuil de SRV sur la base de la valeur caractéristique de SRV calculée.

7. Procédé selon la revendication 3, les au moins deux grandeurs caractéristiques de chemin de transmission d'un chemin de transmission d'au moins deux chemins de transmission (2) comprenant une longueur de file d'attente respective et un rapport signal sur bruit (SRV) de paquets de données issus de la multitude de paquets de données, qui sont transmis par le chemin de transmission d'au moins deux chemins de transmission (2),

le procédé comprenant le calcul d'une longueur collective de file d'attente, qui caractérise les longueurs de file d'attente déterminées de paquets de données sur les au moins deux chemins de transmission (2) lorsque l'au moins une grandeur caractéristique de réseau remplit le premier critère prédéterminé (21) de grandeur caractéristique de réseau.

8. Procédé selon la revendication 7, la sélection adaptative (300) du schéma de planification (LB ; PD ; PS) comprenant les étapes suivantes lorsque la longueur collective de file d'attente calculée remplit un deuxième critère prédéterminé (24) :

la sélection (340) d'un deuxième schéma de planification (PD ; 31b) pour la transmission de paquets de données lorsque la corrélation déterminée remplit un troisième critère prédéterminé (25),

et sinon la sélection (350) d'un troisième schéma de planification (PS ; 32) pour la transmission de paquets de données,

le deuxième critère prédéterminé (24) comprenant le fait que la longueur collective de file d'attente calculée devient inférieure à une valeur de seuil de file d'attente prédéterminée,

le troisième critère prédéterminé (25) comprenant le fait que la corrélation déterminée devient inférieure à une valeur de seuil de corrélation prédéterminée,

le deuxième schéma de planification (PD ; 31b) étant un schéma de duplication de paquets (PD),

le troisième schéma de planification (PS ; 32) étant un schéma de fragmentation de paquets (PS).

9. Procédé selon la revendication 8, la sélection adaptative (300) du schéma de planification (LB ; PD ; PS) comprenant la sélection (360) d'un premier schéma de planification (LB ; 30c) pour la transmission de paquets de données lorsque l'au moins une grandeur caractéristique de réseau remplit le premier critère prédéterminé (21) de grandeur caractéristique de réseau et lorsque la longueur collective de file d'attente calculée ne remplit pas un deuxième critère prédéterminé (24), le premier schéma de planification (LB ; 30c) étant un schéma de répartition de charge (LB),

le deuxième critère prédéterminé (24) comprenant le fait que la longueur collective de file d'attente calculée devient inférieure à une valeur de seuil de file d'attente prédéterminée.

10. Programme informatique, qui est conçu pour exécuter le procédé selon l'une des revendications précédentes 1 à 9.

11. Planificateur adaptatif (5) à chemins multiples d'un système de communication (1) à chemins multiple, qui est conçu pour exécuter le procédé selon l'une des revendications précédentes 1 à 9 et/ou pour exécuter le programme informatique selon la revendication 10.

12. Système de communication (1) à chemins multiples comprenant :

un planificateur adaptatif (5) à chemins multiples selon la revendication 11 ;

un émetteur (3), qui est conçu pour transmettre une multitude de paquets de données au récepteur ;

un récepteur (4),

l'émetteur étant raccordé au récepteur par deux chemins de transmission (2) ou plus,
le système de communication (1) à chemins multiples étant conçu pour exécuter le procédé selon l'une des revendications précédentes 1 à 9.

EP 4 184 883 B1

FIG. 1a

FIG. 1b

FIG. 2

**FIG. 3a**

**FIG. 3b**

**FIG. 3c**

EP 4 184 883 B1

FIG. 4

FIG. 5

**EP 4 184 883 B1**

**IN DER BESCHREIBUNG AUFGEFÜHRTE DOKUMENTE**

**In der Beschreibung aufgeführte Patentdokumente**

- EP 3860064 A1